# EUROPÄISCHE PATENTANMELDUNG

(11) **EP 0 843 488 A2**
(43) Veröffentlichungstag der Anmeldung: **20.05.1998**
(21) Anmeldenummer: 97440078.0
(22) Anmeldetag: 09.09.1997
(51) Int. Cl.: H04Q 3/66

(54) **Verfahren, Vermittlungsstelle und Telekommunikationsnetz zur Steuerung von Massenanrufverbindungen**

(30) Priorität: 14.09.1996 DE 19637530
(71) Anmelder: ALCATEL ALSTHOM COMPAGNIE GENERALE D'ELECTRICITE, 75008 Paris (FR)
(72) Erfinder: Spildener, Kurt, 70435 Stuttgart (DE); Münch, Rainer, 71706 Markgröningen (DE); Hollas, Markus, 70806 Kornwestheim (DE); Stratenberg, Gernot, 70839 Gerlingen (DE); Wegner, Horst, 70439 Stuttgart (DE); Barnsteiner, Rupert, 70188 Stuttgart (DE)
(74) Vertreter: Zinsinger, Norbert

(57) **Zusammenfassung**

Es wird vorgeschlagen, daß in einem Telekommunikationsnetz (KN) zur Steuerung eines Aufbaus von Verbindungen zu einem Teilnehmer (T), der Ziel eines Massenanrufes ist, Messungen zur Erkennung eines Massenanrufes zu dem Teilnehmer (T) durchgeführt werden. Wird eine Verbindung aufgrund eines erkannten Massenanrufes als besetzte Verbindung blockiert, so wird eine Rücksignalisierungsnachricht zum Auslösen der aufgrund des Massenanrufes besetzten Verbindung eine Information beigefügt, die den am Aufbau der besetzten Verbindung beteiligten Vermittlungsstellen (B3, B, M, M2, M22) das Auftreten des Massenanrufes anzeigt.

## Beschreibung

Die vorliegende Erfindung betrifft ein Verfahren, eine Vermittlungsstelle und ein Telekommunikationsnetz zur Steuerung eines Aufbaus von Verbindungen zu einem Teilnehmer, der Ziel eines Massenanrufes ist.

Massenanrufe zu Teilnehmern eines Telekommunikationsnetzes, hervorgerufen beispielsweise durch Umfragen oder Rätsel in Rundfunk und Fernsehen, können zu Instabilitäten, Engpässen oder zu Blockierungen innerhalb des Telekommunikationsnetzes führen. Es treten viele Kurzzeitbelegungen innerhalb eines begrenzten Zeitintervalls in den Vermittlungsstellen des Telekommuniaktionsnetzes auf, die wirtschaftliche Nomalbelegungen verdrängen. Bei dem Betreiber des Telekommunikationsnetzes vorangekündigter Durchführung derartiger Aktionen ist die Verwendung von Drosselungsverfahren, beispielsweise Call Gapping oder Leaky Bucket aus der CCITT-Empfehlung E.412, zur Reduzierung oder Verhinderung von Engpässen und Blockierungen innerhalb des Telekommunikationsnetzes bekannt.

Es ist die Aufgabe der folgenden Erfindung, Instabilitäten, Engpässe oder Blockierungen innerhalb eines Telekommunikationsnetzes, die durch Massenanrufe zu Teilnehmern hervorgerufen werden, zu reduzieren oder zu verhindern.

Diese Aufgabe wird durch die technische Lehre der Ansprüche 1, 4, 5 oder 6 gelöst.

Es ist ein Vorteil der vorliegenden Erfindung, daß die Steuerung des Aufbaus von Verbindungen in dem Fall des Auftretens eines Massenanrufes zu dem Teilnehmer automatisch erfolgt. Des weiteren müssen keine gesonderten Signalisierungsnachrichten an weitere Vermittlungsstellen des Telekommunikationsnetzes zur Drosselung des Verkehrs zu dem Teilnehmer, der Ziel des Massenanrufes ist, übermittelt werden.

In einer vorteilhaften Ausgestaltung der Erfindung wird einer der an dem Aufbau der besetzten Verbindung beteiligten Vermittlungsstelle eine Information signalisiert, so daß diese Vermittlungsstelle den Verkehr in Richtung des Ziels des Massenanrufes auf eine von der Information abhängige Durchlaßrate drosseln kann.

Weitere vorteilhafte Ausgestaltungen der Erfindung sind den abhängigen Patentansprüchen zu entnehmen.

Im folgenden werden zur Verdeutlichung der Erfindung und ihrer Vorteile Ausführungsbeispiele anhand der Zeichnung beschrieben. Es zeigen:
- Fig. 1: ein Ausführungsbeispiel eines erfindungsgemäßen Telekommunikationsnetzes mit einer erfindungsgemäßen Vermittlungsstelle und
- Fig. 2: ein Ablaufdiagramm eines Ausführungsbeispiels eines erfindungsgemäßen Verfahrens.

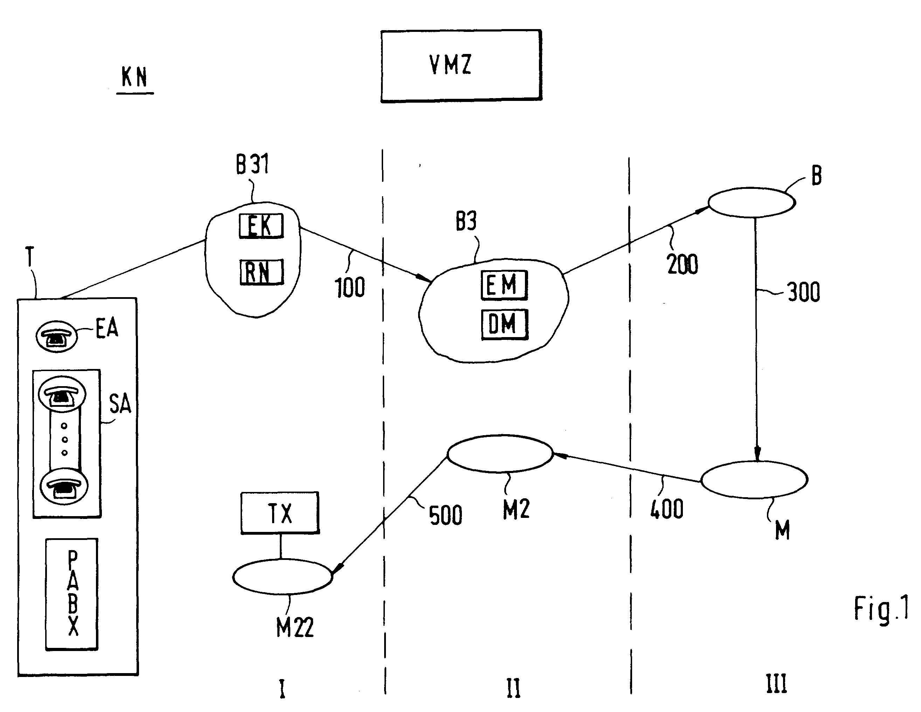

Ein in der Fig. 1 abgebildetes Ausführungsbeispiel zeigt ein Telekommunikationsnetz KN zur Steuerung von Massenanrufen zu Teilnehmern des Telekommunikationsnetzes KN. Massenanruf bedeutet, daß eine große Anzahl von Verbindungen zur gleichen Zeit zu einem Teilnehmer aufgebaut werden sollen. Diese Anzahl von aufzubauenden Verbindungen, die einen Massenanruf charakterisiert, ist abhängig von der Anzahl der Leitungen pro Teilnehmeranschluß. Die Auswirkung des Massenanrufes auf das Telekommunikationsnetz hängt von dem Ursprung des Massenanrufes und der Struktur des Telekommunikationsnetzes ab. Beim Auftreten des Massenanrufes zu dem Teilnehmer kommt es zu Instabilitäten, Engpässen oder Blockierungen in dem Telekommunikationsnetz, so daß der normale Verkehr verdrängt wird.

Das Telekommunikationsnetz KN ist im vorliegenden Ausführungsbeispiel in einen Versorgungsbereich I, einen Regionalbereich II und einen Weitverkehrsbereich III unterteilt. Diese Einteilung ist für bestehende und zukünftige Telekommunikationsnetze üblich, für die Durchführung der Erfindung allerdings nicht notwendig. In diesen drei Bereichen ist eine Vielzahl von Vermittlungsstellen angeordnet. In der vorliegenden Figur 1 sind in dem Versorgungsbereich I stellvertretend die Vermittlungsstellen B31 und M22 dargestellt. An diese Vermittlungsstellen sind jeweils eine Vielzahl von Teilnehmern angeschlossen, von denen im vorliegenden Ausführungsbeispiel stellvertretend ein Teilnehmer T, der an die Vermittlungsstelle B31 angeschlossen ist, und ein Teilnehmer TX dargestellt ist, der an die Vermittlungsstelle M22 angeschlossen ist. Der Teilnehmer T kann, wie in Fig. 1 dargestellt, eine Nebenstellenanlage PABX, ein Sammelanschluß SA oder eine Teilnehmerstation EA, die als Einzelanschluß geschaltet ist, sein. In dem Regionalbereich II sind im vorliegenden Ausführungsbeispiel stellvertretend zwei Vermittlungsstellen B3 und N2 angeordnet. An diese Vermittlungsstellen B3 und N2 können weitere Teilnehmer angeschlossen sein, die in Fig. 1 nicht dargestellt sind. In dem Weitverkehrsbereich III sind im vorliegenden Ausführungsbeispiel stellvertretend ebenfalls zwei Vermittlungsstellen B und M dargestellt. An die Vermittlungsstellen B und M sind im vorliegenden Ausführungsbeispiel keine Teilnehmer angeschlossen. Das Telekommunikationsnetz KN weist des weiteren eine zentrale Steuereinrichtung VMZ auf. Die Vermittlungsstellen B31, B3, B, M, M2 und M22 sind mittels nicht dargestellter Verbindungsleitungen miteinander vermascht. Die Vermittlungsstellen des Telekommunikationsnetzes KN können ein erstes Mittel zur Erkennung eines Auftretens des Massenanrufes aufweisen. Stellvertretend ist in der Fig. 1 das erste Mittel EK der Vermittlungsstelle B31 dargestellt. Ein solches erstes Mittel muß nicht notwendiger Weise in jeder Vermittlungsstelle des Telekommunikationsnetzes KN vorhanden sein. In einer besonders vorteilhaften Ausgestaltung ist ein solches erstes Mittel in denjenigen Vermittlungsstellen des Telekommuniaktionsnetzes KN vorhanden, an die Teilnehmer, die mögliche Ziele eines Massenanrufes sein können, angeschlossen sind. Die Vermittlungsstellen des Telekommunikationsnetzes KN können des weiteren ein zweites Mittel zur Erzeugung einer Rücksignalisierungsnachricht zum Auslösen einer Verbindung aufweisen. Im vorliegenden Ausführungsbeispiel gemäß der Fig. 1 ist ein zweites Mittel RN der Vermittlungsstelle B31 stellvertretend eingezeichnet.

Die Vermittlungsstellen des Telekommunikationsnetzes können des weiteren ein Empfangsmittel zum Empfangen einer Rücksignalisierungsnachricht zum Auslösen einer besetzten Verbindung zu diesem Teilnehmer (T) aufweisen, wobei diese Rücksignalisierungsnachricht eine Information enthält, die das Auftreten des Massenanrufes anzeigt. Darüberhinaus können sie ein Drosselungsmittel aufweisen zum Drosseln des Verkehrs in Richtung des Ziels T des Massenanrufes auf Grund des Empfangens dieser Information. In der Fig. 1 sind stellvertretend das Empfangsmittel EM und das Drosselungsmittel DM der Vermittlungsstelle B3 dargestellt.

Die Vermittlungsstellen des Telekommunkationsnetzes KN übermitteln im vorliegenden Ausführungsbeispiel vorgegebene Informationen zur Erfassung und Auswertung und insbesondere für statistische Zwecke zu der zentralen Steuereinrichtung VMZ. Solche Informationen sind im vorliegenden Fall insbesondere einen Massenanruf zu einem Teilnehmer kennzeichnende Informationen. Die zentrale Steuereinrichtung VMZ ist für die Durchführung der vorliegenden Erfindung vorteilhaft, allerdings nicht notwendig. Es ist möglich, die Steuerung innerhalb des Telekommunikationsnetzes KN ausschließlich über eine Signalisierung zwischen den einzelnen Vermittlungsstellen des Telekommunikationsnetzes KN durchzuführen und dabei auf die zentrale Steuereinrichtung VMZ zu verzichten. Es ist allerdings ebenso möglich, die Steuerung des Telekommunikationsnetzes KN ausschließlich über die zentrale Steuereinrichtung VMZ durchzuführen.

Im vorliegenden Ausführungsbeipiel erkennt die Vermittlungsstelle B31 mittels des ersten Mittels EK einen Massenanruf zu der als Einzelanschluß geschalteten Teilnehmerstation EA des an die Vermittlungsstelle B31 angeschlossenen Teilnehmers T. Dabei wurde ein Verbindungswunsch des Teilnehmers TX zu dem Teilnehmer T von der Vermittlungsstelle B31 blockiert, da der an die Vermittlungsstelle B31 angeschlossene Teilnehmer T besetzt ist. Die besetzte Verbindung von dem Teilnehmer TX zu dem Teilnehmer T wurde in dem Telekommunikationsnetz KN über die Vermittlungsstellen M22, M2, M, B, B3 und B31 aufgebaut. Die besetzte Verbindung wird anschließend ausgehend von der Vermittlungsstelle B31 ausgelöst. Dazu erzeugt das zweite Mittel RN der Vermittlungsstelle B31 eine Rücksignalisierungsnachricht, die in umgekehrter Richtung wie beim Verbindungsaufbau zu der Ursprungsvermittlungsstelle M22 zurückübermittelt wird. Da im vorliegenden Fall ein Massenanruf zu dem Teilnehmer T von dem ersten Mittel EK erkannt wurde, wird dieser Rücksignalisierungsnachricht zum Auslösen der besetzten Verbindung zu diesem Teilnehmer T eine erste Information in Form von einem Parameter hinzugefügt, die den Grund Massenanruf für die Blockierung des Verbindungswunsches von dem Teilnehmer TX zu dem Teilnehmer T anzeigt. Diese Rücksignalisierungsnachricht mit dem Parameter für den Blockierungsgrund Massenanruf wird von der Vermittlungsstelle B31 in einem Schritt 100 zu der Vermittlungsstelle B3, von dieser Vermittlungsstelle B3 in einem Schritt 200 zu der Vermittlungsstelle B, von der Vermittlungsstelle B in einem Schritt 300 zu der Vermittlungsstelle M, von dieser Vermittlungsstelle M in einem Schritt 400 zu der Vermittlungsstelle M2 und von dieser Vermittlungsstelle M2 in einem Schritt 500 zu der Ursprungsvermittlungsstelle M22, an die der Teilnehmer TX angeschlossen ist, übermittelt. Jede der an dem ursprünglichen Aufbau der besetzten Verbindung von dem Teilnehmer TX zu dem Teilnehmer T beteiligte Vermittlungsstelle M22, M2, M, B, B3 und B31 empfängt mittels ihres Empfangsmittels die erste Information und erhält damit die Information, daß ein Massenanruf zu dem Teilnehmer T vorliegt. Das Vorliegen des Massenanrufes wird von der Vermittlungsstelle B31 ebenfalls der zentralen Einrichtung VMZ signalisiert.

Den am Aufbau der besetzten Verbindung beteiligten Vermittlungsstellen ist es nun möglich, geeignete Maßnahmen gegen das Auftreten des Masseanrufes zu treffen, indem sie den Verkehr in Richtung des Zieles des Massenanrufes mittels des jeweiligen Drosselungsmittels drosseln. Dabei ist es einem Betreiber des Telekommunikationsnetzes KN freigestellt, ob eine an dem Aufbau der besetzten Verbindung beteiligte Vermittlungsstelle die Information über das Auftreten des Massenanrufes insofern nutzt, als daß sie den Verkehr in Richtung des Zieles des Massenanrufes drosselt oder nicht. Drosseln bedeutet dabei, daß die jeweilige Vermittlungsstelle den über sie geführten Verkehr zu dem Teilnehmer reduziert. Im vorliegenden Ausführungsbeispiel wird der Verkehr zu dem Teilnehmer auf eine vorgegebene Anzahl von weitervermittelten Anrufen pro Zeit, d.h. auf die vorgegebene Durchlaßrate, begrenzt. Die nicht weitervermittelten Anrufe werden an der Vermittlungsstelle abgewiesen. Den anrufenden Teilnehmerstationen wird ein Besetztzeichen übermittelt. Für die Drosselung des Verkehrs werden bekannte Drosselungsverfahren wie Leaky Bucket oder Call Gapping verwendet.

Vorteilhafterweise ist es möglich, mit der Rücksignalisierungsnachricht zum Auslösen der besetzten Verbindung des weiteren eine zweite Information zu den an der besetzten Verbindung beteiligten Vermittlungsstellen zu übermitteln, mittels der die jeweilige Vermittlungsstelle die Durchlaßrate des Verkehrs in Richtung des Zieles des Massenanrufes bestimmt. Eine solche zweite Information kann beispielsweise die Zahl der Anschlußleitungen sein, mittels derer der Teilnehmer T, der Ziel des Massenanrufes ist, an die Vermittlungsstelle B31 angeschlossen ist. Beispielsweise könnte festgelegt werden, daß pro Anschlußleitung ein erlang an Verkehr zu dem Ziel des Massenanrufes von der jeweiligen Vermittlungsstelle in Richtung des Ziels des Massenanrufes weitergeleitet wird. Es ist allerdings ebenfalls möglich, daß die jeweilige Durchlaßrate bereits fest in der jeweiligen Vermittlungsstelle implementiert ist oder der jeweiligen Vermittlungsstelle, beispielsweise von der zentralen Steuereinrichtung VMZ, signalisiert wird.

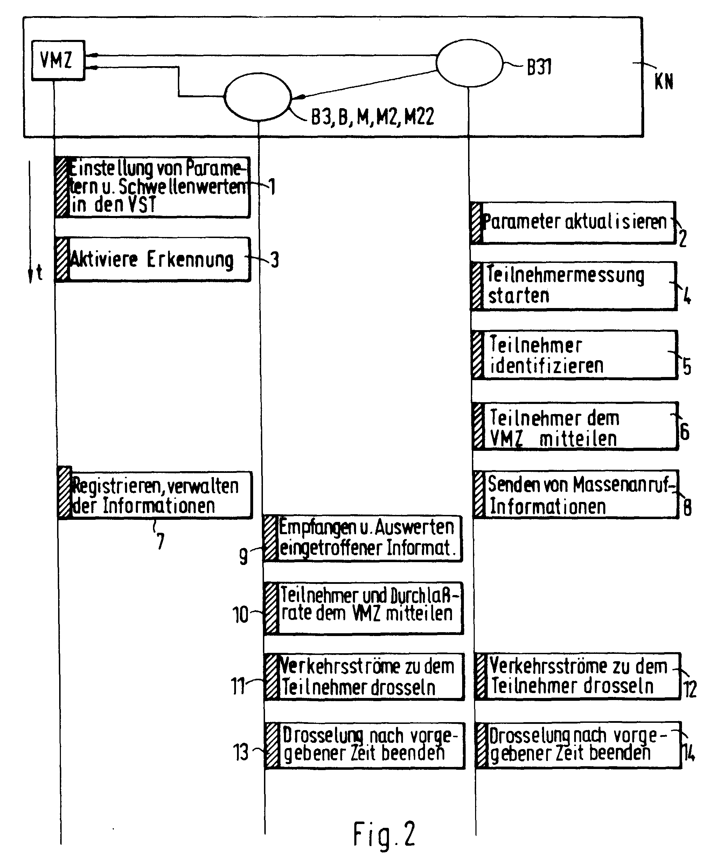

Im folgenden wird die Funktionsweise des Telekommunikationsnetzes KN zur Steuerung eines Aufbaus von Verbindungen zu dem Teilnehmer T, der Ziel des Massenanrufes ist, beschrieben. Dazu zeigt die Fig. 2 ein Ablaufdiagramm eines Ausführungsbeispiels des erfindungsgemäßen Verfahrens zur Durchführung in dem Telekommunikationsnetz KN. Die durchzuführenden Verfahrensschritte sind in Fig. 2 nach dem Ort, in dem sie durchgeführt werden, also der den Massenanruf erkennenden Vermittlungsstelle B31, den weiteren, an dem Aufbau der besetzten Verbindung beteiligten Vermittlungsstellen M22, M2, M, B und B3 und der zentralen Steuereinrichtung VMZ, geordnet.

In einem Schritt 1 wird beispielsweise mittels eines an die zentrale Steuereinrichtung VMZ angeschlossenen Bedienerterminals eine Einstellung von Parametern, die die Charakteristiken des erfindungsgemäßen Verfahrens beschreiben, eingegeben und zu den Vermittlungsstellen des Telekommunikationsnetzes KN übermittelt. Für das vorliegende Ausführungsbeispiel des erfindungsgemäßen Verfahrens werden insbesondere als Parameter ein Teilnehmerschwellenwert für die Bestimmung des Zieles des Massenanrufes und Drosselungsraten für die Vermittlungsstellen des Telekommunikationsnetzes KN für den Fall eingegeben, daß bei Auftreten eines Massenanrufes die jeweilige Vermittlungsstelle den über sie geführten Verkehr zu dem betroffenen Teilnehmer, der Ziel des Massenanrufes ist, drosseln muß.

In einem Schritt 2 werden die in dem Schritt 1 eingegebenen Parameter jeweils in den Vermittlungsstellen aktualisiert. Daraufhin wird in einem Schritt 3, von der zentralen Steuereinrichtung VMZ aus, die Erkennung des Massenanrufes für das Telekommunikationsnetz KN aktiviert. In einem Schritt 4 wird anschließend von den Vermittlungsstellen eine Teilnehmermessung zur Bestimmung des Teilnehmers, der Ziel des Massenanrufes ist, gestartet. Diese Teilnehmermessung findet beispielsweise in einem Zeittakt von zehn Sekunden statt. In einem Schritt 5 wird der Teilnehmer, der Ziel des Massenanrufes ist, identifiziert. Dazu wird ein Teilnehmerwert bestimmt, der sich aus dem Quotienten aus der Anzahl der erfolgreich zu dem Teilnehmer vermittelten Belegungen und der Anzahl aller für diesen Teilnehmer an der Vermittlungsstelle B31 eingetroffenen Belegungsversuche ergibt. Die Belegungsversuche umfassen sowohl erfolgreiche als auch nicht erfolgreiche Belegungen, die an der jeweiligen Vermittlungsstelle für diesen Teilnehmer eintreffen. Für alle Teilnehmer wird also jeweils ein Teilnehmerwert bestimmt, der anschließend mit dem Teilnehmerschwellenwert, der im Schritt 1 an die Vermittlungsstellen übermittelt wurde, verglichen wird. Unterschreitet der Teilnehmerwert den Teilnehmerschwellenwert, dann wird der Massenanruf zu diesem Teilnehmer erkannt. Werden mehrere Teilnehmer als Ziele von Massenanrufen erkannt, so wird derjenige Teilnehmer mit dem niedrigsten Teilnehmerschwellenwert als wichtigster festgelegt. Es ist möglich, die Verfahrensweise zur Bestimmung des Teilnehmers, der Ziel des Massenanrufes ist, auf eine andere Weise durchzuführen.

In einem Schritt 6 wird daraufhin der in dem Schritt 5 erkannte Teilnehmer, der Ziel des Massenanrufes ist, in einer Liste der Vermittlungsstelle registriert und der zentralen Steuereinrichtung VMZ zusammen mit anderen, diesen Massenanruf betreffende Informationen übermittelt. Solche anderen, den Massenanruf betreffende Informationen können beispielsweise die Angabe der Vermittlungsstelle, die den Teilnehmer, der Ziel des Massenanrufes ist, ermittelt hat, die Angabe der Rufnummer des ermittelten Teilnehmers und die Durchlaßrate sein, auf die der Verkehr zu dem Teilnehmer, der Ziel des Massenanrufes ist, gedrosselt wird. Die zentrale Steuereinrichtung VMZ empfängt in einem Schritt 7 die zu ihr übermittelten Informationen, die den erkannten Massenanruf betreffen, und speichert sie in einem Speicher zur weiteren Auswertung ab.

In einem Schritt 8 wird von der den Massenanruf erkennenden Vermittlungsstelle B31 mittels ihres zweiten Mittels RN die Rücksignalisierungsnachricht zum Auslösen der besetzten Verbindung von dem Teilnehmer TX erzeugt. Dabei wird dieser Rücksignalisierungsnachricht die erste Information, die das Auftreten des Massenanrufes anzeigt, hinzugefügt. Die Rücksignalisierungsnachricht wird daraufhin den am Aufbau der besetzten Verbindung beteiligten Vermittlungsstellen B3, B, M, M2 und M22, in umgekehrter Richtung wie beim Verbindungsaufbau, übermittelt, so daß sie von dem Auftreten des Massenanrufes erfahren.

In einem Schritt 9 empfangen die Vermittlungsstellen B3, B, M, M2 und M22 die übermittelten, den erkannten Massenanruf betreffende Informationen, speichern diese ab und werten sie, insbesondere zur Bestimmung von Drosselungsparametern, wie bereits oben beschrieben, aus. In einem Schritt 10 übermitteln die am Aufbau der besetzten Verbindung beteiligten Vermittlungsstellen Angaben über den Teilnehmer T, der Ziel des Massenanrufes ist, und ihre jeweilige Durchlaßrate zu der zentralen Steuereinrichtung VMZ. In einem Schritt 11 starten die Vermittlungsstellen die Drosselung des über sie zu dem Teilnehmer, der Ziel des Massenanrufes ist, geführten Verkehrs auf die für diese jeweilige Vermittlungsstelle festgelegte Durchlaßrate. In einem Schritt 12 wird gleiches von der den Massenanruf erkennenden Vermittlungsstelle B31 durchgeführt. Die Durchlaßrate kann für jede Vermittlungsstelle des Telekommunikationsnetzes KN individuell festgelegt werden.

Aufgrund der übermittelten Informationen kann die zentrale Steuereinrichtung VMZ eine Auswertung des erkannten Massenanrufes vornehmen. Es besteht die Möglichkeit, bei Bedarf eine Änderung der von den Vermittlungsstellen veranlaßten Drosselung der Verkehre zu dem Teilnehmer, der Ziel des Massenanrufes ist, durch die zentrale Steuereinrichtung VMZ vorzunehmen. Es ist ebenfalls möglich, daß ein Vergleich in der zentralen Steuereinrichtung VMZ zwischen der augenblicklichen Massenanruf-Situation und ähnlichen, aus der Historie bekannten Massenanruf-Situationen zu einem Korrekturvorschlag von seiten der zentralen Steuereinrichtung VMZ zur Steuerung des Massenanrufes führen kann. Diese vorgeschlagenen Änderungen zur Steuerung des Massenanrufes werden von der zentralen Steuereinrichtung VMZ zu den an der Drosselung beteiligten Vermittlungsstellen des Telekommunikationsnetzes KN signalisiert, die diese Vorschläge daraufhin direkt umsetzen. Die Auswirkungen der veranlaßten Änderungen zur Steuerung des Massenanrufes werden von den beteiligten Vermittlungsstellen der zentralen Steuereinrichtung VMZ gemeldet, die diese Auswirkungen daraufhin ebenfalls auswertet und gegebenenfalls erneut korrigiert. Diese beschriebene mögliche Veranlassung von Änderungen zur Steuerung des Massenanrufes sind für die Durchführung der Erfindung nicht notwendig, aber vorteilhaft, da auf diese Weise eine effektivere Steuerung des Massenanrufes möglich ist.

In den Schritten 13 und 14 wird die Drosselung des durch die jeweiligen Vermittlungsstellen geführten Verkehrs zu dem Teilnehmer, der Ziel des Massenanrufes ist, nach einer vorgegebenen Zeit, z.B. 30 Minuten, beendet. Diese vorgegebene Zeit zur Aufhebung der Drosselung ist veränderbar. Auf diese Weise wird eine mögliche fortlaufende Aktivierung und Deaktivierung der Drosselung in den Vermittlungsstellen vermieden.

## Patentansprüche

1. Verfahren zur Steuerung eines Aufbaus von Verbindungen zu einem Teilnehmer (T), der Ziel eines Massenanrufes ist, in einem Telekommunikationsnetz (KN) mit Vermittlungsstellen (B31, B3, B, M, M2, M22),
bei dem in Vermittlungsstellen (B31) eine Erkennung eines Auftretens des Massenanrufes durchgeführt wird,
bei dem das Auftreten des Massenanrufes zu diesem Teilnehmer (T) erkannt wird und
bei dem eine Rücksignalisierungsnachricht zum Auslösen einer besetzten Verbindung zu diesem Teilnehmer (T) eine Information enthält, die den an dem Aufbau der besetzten Verbindung beteiligten Vermittlungsstellen (B3, B, M, M2, M22), das Auftreten des Massenanrufes anzeigt.

2. Verfahren nach Anspruch 1, dadurch gekennzeichnet, daß wenigstens einer der an dem Aufbau der besetzten Verbindung beteiligten Vermittlungsstellen (B3, B, M, M2, M22) eine weitere Information signalisiert wird, so daß diese wenigstens eine der Vermittlungsstellen (B3, B, M, M2, M22) den Verkehr in Richtung des Ziels (T) des Massenanrufes auf eine von der weiteren Information abhängige Durchlaßrate drosselt.

3. Verfahren nach Anspruch 2, dadurch gekennzeichnet, daß die zweite Information die Anzahl der Anschlußleitungen ist, mittels derer der Teilnehmer (T), der Ziel des Massenanrufes ist, an eine der Vermittlungsstellen (B31) angeschlossen ist.

4. Vermittlungsstelle (B31) zur Steuerung eines Aufbaus von Verbindungen zu einem Teilnehmer (T), der Ziel eines Massenanrufes ist, in einem Telekommunikationsnetz (KN) mit Vermittlungsstellen (B31, B3, B, M, M2, M22),
mit einem ersten Mittel (EK) zur Erkennung eines Auftretens des Massenanrufes,
mit einem zweiten Mittel (RN) zur Erzeugung einer Rücksignalisierungsnachricht zum Auslösen einer besetzten Verbindung zu diesem Teilnehmer (T), wobei diese Rücksignalisierungsnachricht in dem Fall, in dem das erste Mittel (EK) das Auftreten des Massenanrufes zu diesem Teilnehmer (T) erkennt, eine Information enthält, die den an dem Aufbau der besetzten Verbindung beteiligten Vermittlungsstellen (B3, B, M, M2, M22) das Auftreten des Massenanrufes anzeigt.

5. Vermittlungsstelle (B3) zur Steuerung eines Aufbaus von Verbindungen zu einem Teilnehmer (T), der Ziel eines Massenanrufes ist, in einem Telekommunikationsnetz (KN) mit Vermittlungsstellen (B31, B3, B, M, M2, M22),
mit einem Empfangsmittel (EM) zum Empfangen einer Rücksignalisierungsnachricht zum Auslösen einer besetzten Verbindung zu diesem Teilnehmer (T), wobei diese Rücksignalisierungsnachricht eine Information enthält, die das Auftreten des Massenanrufes anzeigt, und
mit einem Drosselungsmittel (DM) zum Drosseln des Verkehrs in Richtung des Ziels (T) des Massenanrufes auf Grund des Empfangens dieser Information.

6. Telekommunikationsnetz (KN) zur Steuerung eines Aufbaus von Verbindungen zu einem Teilnehmer (T), der Ziel eines Massenanrufes ist, mit einer Vermittlungsstelle (B31) nach Anspruch 4 und einer Vermittlungsstelle nach Anspruch 5.
